# EUROPEAN PATENT SPECIFICATION

(11) **EP 3 473 846 B1**
(45) Date of publication and mention of the grant of the patent: **30.11.2022**
(21) Application number: 18200369.9
(22) Date of filing: 15.10.2018
(51) Int. Cl.: F03D 1/02, F03D 17/00

(54) **WIND POWER GENERATOR SYSTEM AND METHOD AND PROGRAM FOR CONTROLLING THE SAME**
WINDENERGIEGENERATORSYSTEM UND VERFAHREN UND PROGRAMM ZUR STEUERUNG DAVON
SYSTÈME DE GÉNÉRATION D'ÉNERGIE ÉOLIENNE, SON PROCÉDÉ ET PROGRAMME DE COMMANDE

(30) Priority: 16.10.2017 JP 2017200652; 16.10.2017 JP 2017200653
(43) Date of publication of application: 24.04.2019
(73) Proprietor: Mitsubishi Heavy Industries, Ltd., Tokyo 108-8215 (JP)
(72) Inventor: IDE, Kazunari, Tokyo 108-8215 (JP)
(74) Representative: Henkel & Partner mbB

(56) References cited:
- WO-A1-2016/128002
- WO-A1-2016/128004
- WO-A1-2016/128005
- US-A1- 2003 170 123

## Description

### [Technical Field]

The present invention relates to a wind power generator system and a method and a program for controlling the wind power generator system.

### [Background Art]

Although a wind power generator system typically has a structure in which only one wind turbine section is installed for one tower section (single rotor type), a so-called multi-rotor type wind power generator system having a structure in which a plurality of wind turbine sections is installed for one tower section is also known. In the multi-rotor type wind power generator system, the total swept area of the wind turbine sections is increased, and therefore a power generation amount (output power) obtained from one tower section is increased.

PTL 1 and PTL 2 below disclose technologies relating to the multi-rotor type wind power generator systems.

### [Citation List]

### [Patent Literature]

[PTL 1] PCT International Publication No. WO 2017/108057
[PTL 2] German Patent Specification No. 102012020052

WO 2016/128002 A1 discloses a wind turbine system comprising a plurality of wind turbines mounted to a common support structure, wherein each of the plurality of wind turbines includes a rotor and a power generation system driven by the rotor, wherein the wind turbine system further comprises: localised control means including a plurality of local control modules, wherein each of the local control modules is operable to monitor the operation of a respective one of the plurality of wind turbines, and to issue local control commands thereto to achieve a set of local control objectives; and centralised control means configured to monitor the operation of the wind turbine system and provide centralised control commands to the plurality of wind turbines in order to achieve a set of supervisory control objectives associated with at least two of the plurality of wind turbines.

US 2003/170123 A1 discloses a wind turbine with an array of rotors arranged at various heights. Each rotor is optimized for the height at which it is located. Optimization of each rotor could include selection of rated power, solidity, tip speed, blade twist, blade taper, or rotor diameter. Each rotor can also be operated in a manner that is optimized for the wind speed it experiences. Optimized operation parameters could include blade pitch angle or rotor speed.

### [Summary of Invention]

### [Technical Problem]

A conventional single-rotor type wind power generator system detects an anomalous state of the system by using a method in which an actual operational state and a normal model based on accumulated data of the past are compared to each other. However, the aforementioned conventional method requires creating normal models which match respective various operational states, and the method also requires accumulating an enormous amount of operational data for creating the normal models. There are various actual operational states (e.g., combinations of a setting value of a pitch angle of a blade and a setting value of a yaw angle of the wind turbine section), and thus a normal model for comparison may not be obtained.

In the multi-rotor type wind power generator system, a plurality of wind turbine sections is provided for one tower section, so that when one of the wind turbine sections is operating anomalously, other wind turbine sections may be affected (e.g., imbalance). Thus, it is desired to quickly determine whether anomaly is present in each of the wind turbine sections, especially for the multi-rotor type wind power generator systems.

When an anomaly occurs in the single-rotor type wind power generator system, the wind turbine section is usually controlled to forcedly perform an emergency shutdown. The multi-rotor type wind power generator system includes a plurality of wind turbine sections, and thus when performing such an emergency-shutdown control for anomaly, at least one of the wind turbine sections performs an emergency shutdown. Due to this configuration, when the multi-rotor type wind power generator system performs emergency-shutdown control, one tower section consequently includes a wind turbine section on which the emergency-shutdown control is performed and a wind turbine section on which the emergency-shutdown control is not performed and which is normally operating. As a result, an imbalance occurs in the wind power generator system, and an excessive load may act on the whole wind power generator system. An excessive load causes breakage and the like in the wind power generator system, and thus the multi-rotor type wind power generator system requires prediction of a load to be generated in each component of the wind power generator system.

In the case where the emergency-shutdown control is performed, predicting a load to be generated in each component of the wind power generator system enables control such as cooperative control of the whole wind turbine sections for suppressing the load.

The present invention is made in view of such situations and an object thereof is to provide a wind power generator system and a method and a program for controlling the wind power generator system that are capable of precisely and quickly determining whether an anomaly is present by a simple process.

### [Solution to Problem]

According to the present invention, there is provided a wind power generator system as set out in independent claim 1, a method for controlling a wind power generator system as set out in independent claim 11, and a program for controlling a wind power generator system as set out in independent claim 12. Advantageous developments are defined in the dependent claims.

A first aspect of the present invention is a wind power generator system including: a tower section; a plurality of wind turbine sections, each of which includes a rotor, a blade provided on the rotor, and an electric generator configured to generate electric power by rotational force of the rotor; support members joined to the tower section and supporting the respective wind turbine sections; a detection unit configured to detect a value of a predetermined parameter indicating an operational state of each of the wind turbine sections; and an anomaly determination unit configured to determine whether an anomaly is present in each of the wind turbine sections on the basis of the operational state of each of the wind turbine sections detected by the detection unit.

According to such a configuration, each of the wind turbine sections includes the rotor, the blade provided on the rotor, and the electric generator configured to generate electric power by rotational force of the rotor and is supported by a corresponding one of the support members joined to the tower section. Accordingly, the wind turbine sections are installed on the tower section via the support members. Thus, each wind turbine section is disposed under the environment (wind condition) of relatively approximated wind condition and rotates by receiving wind in the same direction to generate electric power. It is assumed that, in the wind turbine sections under the approximately equivalent wind condition, their operational states during normal operation substantially coincide with each other. In the present invention, the detection unit detects the operational state of each of the wind turbine sections, and it is determined whether an anomaly is present in each wind turbine section on the basis of the detected operational state of each wind turbine section. This makes it possible to precisely and quickly determine whether an anomaly is present in the wind turbine sections. In a conventional anomaly monitoring method, an actual operational state and a normal model based on accumulated data of the past are compared to each other. However, according to such a configuration described above, such an enormous amount of data and normal models as required for the conventional method is not necessary, and this makes it possible to precisely determine whether an anomaly is present with an easier process.

In the aforementioned wind power generator system, the anomaly determination unit may determine whether an anomaly is present in the wind turbine sections on the basis of an instantaneous value of the predetermined parameter indicating the operational state of each of the wind turbine sections.

According to such a configuration, the anomaly determination is based on the instantaneous value of the operational state, and thus it is possible to precisely and quickly determine whether an anomaly is present.

In the aforementioned wind power generator system, the instantaneous value of the predetermined parameter indicating the operational state may be an instantaneous value of at least any one of pressure, temperature, rotational speed of the rotor, rotational speed of the electric generator, and a vibration level in each of the wind turbine sections.

According to such a configuration, when the wind turbine sections under approximately the same wind condition are normally operating, it is assumed that the instantaneous value of each parameter, i.e., the pressure, temperature, rotational speed of the rotor, rotational speed of the electric generator, and vibration level, is substantially equivalent among all the disposed wind turbine sections. Owing to this, use of the parameter enables more precise determination of whether an anomaly is present.

In the aforementioned wind power generator system, the anomaly determination unit may determine whether an anomaly is present in the wind turbine sections on the basis of an integrated value of the predetermined parameter indicating the operational state of each of the wind turbine sections.

According to such a configuration, the anomaly determination is based on the integrated value of the operational state, and thus it is possible to precisely and quickly determine whether an anomaly is present.

In the aforementioned wind power generator system, the integrated value of the predetermined parameter indicating the operational state may be an integrated value of at least any one of stress and a pitch angle of the blade in each of the wind turbine sections.

According to such a configuration, when the wind turbine sections under approximately the same wind condition are normally operating, it is assumed that the integrated value of each parameter, i.e., the stress and pitch angle of the blade, is substantially equivalent among all the disposed wind turbine sections. Owing to this, use of the parameter enables more precise determination of whether an anomaly is present.

In the aforementioned wind power generator system, the anomaly determination unit may calculate an average value and deviation of the value of the predetermined parameter indicating the operational state in the wind turbine sections and may determine that the wind turbine section in an operational state in which its deviation is greater than a preset threshold value is anomalous.

According to such a configuration, it is possible to identify the wind turbine section in the operational state that significantly differs from the average value of the predetermined parameter indicating the operational state in the wind turbine sections.

The aforementioned wind power generator system may include: a virtual model creation unit configured to create a virtual model corresponding to the wind power generator system on the basis of the operational state measured by the detection unit; and a load prediction unit configured, when the anomaly determination unit determines that at least one of the wind turbine sections is anomalous, to predict a load to be generated in each component of the wind power generator system using the virtual model on the basis of information on an emergency shutdown of the wind turbine section determined to be anomalous and information on a current operational state of the wind turbine section other than the wind turbine section determined to be anomalous.

According to such a configuration, each of the wind turbine sections includes the rotor, the blade provided on the rotor, and the electric generator configured to generate electric power by rotational force of the rotor and is supported by the corresponding the support members joined to the tower section. Accordingly, the wind turbine sections are installed on the tower section via the support members. Thus, each wind turbine section is disposed under the environment (wind condition) of relatively approximated wind condition and rotates by receiving wind in the same direction to generate electric power. When an anomaly occurs in any of the wind turbine sections, a load to be generated on each component of the wind power generator system due to an emergency shutdown can be predicted using the virtual model of the wind power generator system created based on the actually measured operational state.

The aforementioned wind power generator system may include an estimation unit configured, when the load predicted by the load prediction unit is greater than or equal to a preset threshold value, to change a control parameter of the wind turbine section other than the wind turbine section determined to be anomalous and to estimate such a set value of the control parameter that the load predicted by the load prediction unit becomes minimum.

According to such a configuration, when such a serious danger that the load exceeds the preset threshold value is predicted, the control parameter of the wind turbine section other than the wind turbine section determined to be anomalous is changed in the virtual model to perform a simulation and such a set value of the control parameter that the predicted load becomes minimum is estimated. This configuration makes it possible to obtain the set value of the control parameter of the wind turbine section (wind turbine section other than the wind turbine section determined to be anomalous) for effectively suppressing the load.

The aforementioned wind power generator system may include a control unit to perform control, based on the set value estimated by the estimation unit, of the wind turbine section other than the wind turbine section performing an emergency shutdown, before the load predicted by the load prediction unit is generated.

According to such a configuration, the wind turbine section other than the wind turbine section determined to be anomalous is controlled on the basis of the estimated set value, before the load predicted by the load prediction unit is generated in the wind power generator system. This configuration makes it possible to suppress the load to be actually generated by controlling the control parameter of the wind turbine section not performing an emergency shutdown, before the load due to the emergency shutdown is actually generated. Owing to this, influence of the load due to the emergency shutdown on the wind power generator system can be effectively suppressed, and consequently, fatigue and failure in each component and the like constituting the wind power generator system can be prevented.

In the aforementioned wind power generator system, the control parameter may be at least any one of the pitch angle of the blade, yaw angle of the wind turbine section, and maximum rotational speed of the electric generator.

According to such a configuration, the operational state of the wind turbine section other than the wind turbine section determined to be anomalous can be effectively controlled by using, as the control parameter, at least any one of the pitch angle of the blade, yaw angle of the wind turbine section, and maximum rotational speed of the electric generator.

The aforementioned wind power generator system may include a virtual model correction unit configured to correct the virtual model on the basis of the operational state measured by the detection unit, when an anomaly of the wind turbine sections is not determined to be present by the anomaly determination unit.

According to such a configuration, the virtual model is corrected on the basis of the measured operational state when such a normal operation that any anomaly has not been determined to be present is performed, and thus accuracy of the virtual model is improved, and consequently, accuracy of the load prediction and the like is also improved.

A second aspect of the present invention is a method for controlling a wind power generator system including: a tower section; a plurality of wind turbine sections, each of which includes a rotor, a blade provided on the rotor, and an electric generator configured to generate electric power by rotational force of the rotor; and support members joined to the tower section and supporting the respective wind turbine sections, the method including: a detection step of detecting a value of a predetermined parameter indicating an operational state of each of the wind turbine sections; and an anomaly determination step of determining whether an anomaly is present in each of the wind turbine sections on the basis of the operational state of each of the wind turbine sections detected through the detection step.

A third aspect of the present invention is a program for controlling a wind power generator system including: a tower section; a plurality of wind turbine sections, each of which includes a rotor, a blade provided on the rotor, and an electric generator configured to generate electric power by rotational force of the rotor; and support members joined to the respective tower sections and supporting the wind turbine sections, the program causing a computer to execute: a detection process of detecting a value of a predetermined parameter indicating an operational state of each of the wind turbine sections; and an anomaly determination process of determining whether an anomaly is present in each of the wind turbine sections on the basis of the operational state of each of the wind turbine sections detected through the detection process.

### [Advantageous Effects of Invention]

According to the present invention, it is possible to precisely and quickly determine whether an anomaly is present.

### [Brief Description of Drawings]

[Fig. 1] Fig. 1 is a schematic diagram illustrating a wind power generator system according to a first embodiment of the present invention;
[Fig. 2] Fig. 2 is a function block diagram illustrating functions of an anomaly determination unit in the wind power generator system according to the first embodiment of the present invention;
[Fig. 3] Fig. 3 is a flow chart illustrating an anomaly determination process by a first anomaly determination unit in the wind power generator system according to the first embodiment of the present invention;
[Fig. 4] Fig. 4 is a flow chart illustrating an anomaly determination process by the first anomaly determination unit in a modification of the wind power generator system according to the first embodiment of the present invention;
[Fig. 5] Fig. 5 is a schematic diagram illustrating a wind power generator system according to a second embodiment of the present invention;
[Fig. 6] Fig. 6 is a function block diagram illustrating functions of a control device in the wind power generator system according to the second embodiment of the present invention; and
[Fig. 7] Fig. 7 is a flow chart illustrating load suppression control by the control device in the wind power generator system according to the second embodiment of the present invention.

### [Description of Embodiments]

### First Embodiment

A first embodiment of a wind power generator system and a method and a program for controlling the wind power generator system according to the present invention will be described below, with reference to the drawings.

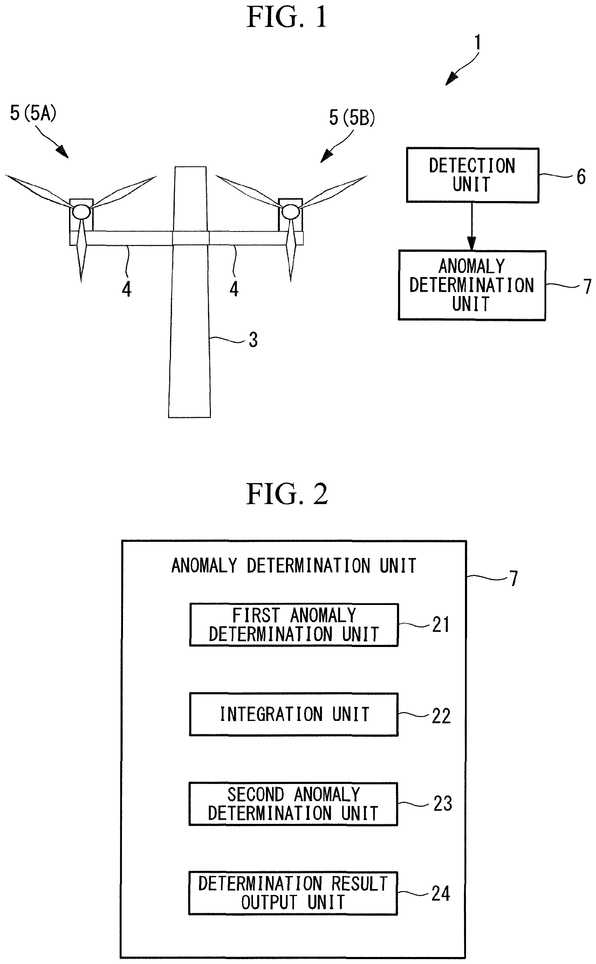

Fig. 1 is a schematic diagram illustrating the wind power generator system according to the first embodiment of the present invention. As illustrated in Fig. 1, a wind power generator system 1 of this embodiment includes, as main components, a tower section 3, support members 4, wind turbine sections 5, a detection unit 6, and an anomaly determination unit 7. The wind power generator system 1 is interconnected to a utility grid to transmit generated electric power to the utility grid and is installed onshore or offshore. The wind power generator system 1 may supply electric power directly to plants and other facilities, or to an energy storage facility. Although the wind power generator system 1 of this embodiment is described as the wind power generator system 1 of multi-rotor type including two wind turbine sections 5, the number of the wind turbine sections 5 is not limited thereto and can be suitably changed. In the following description, the reference numeral of the wind turbine sections 5 will be 5A and 5B when each of the wind turbine sections 5 are distinguished from each other and will be simply 5 when they are not distinguished from each other. The detection unit 6 and the anomaly determination unit 7 can be implemented by a general-purposed computer and may be connected to the tower section 3, the support members 4, the wind turbine sections 5, and the like to remotely perform various processes. When receiving information acquired by a sensor included in each wind turbine section 5, the detection unit 6 detects a predetermined parameter indicating an operational state on the basis of the acquired information.

The tower section 3 has a structure elongated in one direction, and a foundation of the tower section 3 is provided on the installation surface such that axial direction of the tower section 3 is perpendicular to the installation surface. The tower section 3 may be, for example, one cylindrical member, or may be formed by combining a plurality of elongated members.

Each support member 4 is elongated in one direction and is joined to the tower section 3 at its base being one end and supports the corresponding one of the wind turbine sections 5 at its distal end being the other end. In a case where one wind turbine section 5 is installed to one support member 4, the number of the support members 4 joined to the tower section 3 is the same as that of the wind turbine sections 5. The support member 4 may be a member having an elongated shape such as cylindrical shape or may be a member having a truss structure in which a plurality of members is combined. The support member 4 may be formed of, for example, an elongated member that mainly bears a compressive force and a wire member that bears a tensile force.

Each wind turbine section 5 includes a nacelle, a rotor and an electric generator housed in the nacelle, a rotor head provided at a tip of the rotor, and a plurality of (e.g., three) blades.

The nacelle is installed on top or the bottom of the support member 4 and houses the rotor, a gear box, the electric generator, and the like. The rotor head is provided on one end of the nacelle. The rotor is rotatable about an approximately horizontal axis. One end of the rotor is connected to the rotor head and the other end of the rotor is connected directly to the electric generator, for example, or connected to the electric generator via the gear box or a hydraulic pump and hydraulic motor. The electric generator is driven by a rotational force generated through axial rotation of the rotor to generate electric power.

The plurality of blades is radially mounted on the rotor head. The blades rotate about the rotor by receiving wind. Each blade is connected to the rotor head via a slewing ring bearing for pitch control and is rotatable about a blade axis extending in a longitudinal direction of the blade. Accordingly, a pitch angle of each blade is adjusted.

The nacelle turns on the substantially horizontal plane with respect to the support member 4 to set the direction of the rotor head in accordance with the wind direction so that the rotation surfaces of the blades face the wind direction. Turning of the nacelle on the substantially horizontal plane is referred to as yawing. The nacelle turns via a yaw slewing ring bearing connected to the support member 4.

The detection unit 6 detects a value of a predetermined parameter indicating an operational state of each of the wind turbine sections 5. Specifically, the detection unit 6 is provided for the wind turbine section 5A and wind turbine section 5B and detects, as the operational state of each of the wind turbine sections 5A and 5B, at least any one of pressure, temperature, rotational speed of the rotor, rotational speed of the electric generator, a vibration level, stress, and a pitch angle of the blade. The pressure is pressure of a governing oil for operating the pitch angle of the blade. The temperature is temperature of heat generated by operation of each device (e.g., the electric generator) included in each wind turbine section 5. The temperature may be temperature in the rotor head or the nacelle or may be temperature of a control panel. The rotational speed of the rotor is a rotational speed of the rotor included in each wind turbine section 5. The rotational speed of the electric generator is a rotational speed of the electric generator included in each wind turbine section 5. The vibration level is a level (intensity) of vibration generated by operation of each wind turbine section 5. The stress is a force (a load) generated in each blade when the external force of the wind acts on the blade included in each wind turbine section 5. The stress includes the stress generated not only in each blade but also in the whole structure. The pitch angle of the blade is an angle of each blade with respect to its blade rotary shaft (wind receiving surface).

The detection unit 6 in the description of this embodiment detects the rotational speed of the rotor and the stress. That is, the detection unit 6 in this embodiment detects the rotational speed of the rotor and the stress of each of the wind turbine sections 5A and 5B and outputs the detection result to the anomaly determination unit 7. The aforementioned other parameters (the pressure, temperature, rotational speed of the electric generator, vibration level, and pitch angle of the blade) are applicable as well as in the case of detecting the rotational speed of the rotor and the stress. Among the parameters, ones compared on the basis of their instantaneous values (the pressure, temperature, rotational speed of the rotor, rotational speed of the electric generator, and vibration level) are output to a first anomaly determination unit 21 in the anomaly determination unit 7, whereas those compared on the basis of their integrated values (the stress and pitch angle of the blade) are output to a second anomaly determination unit 23 in the anomaly determination unit 7. Each of the parameters is an example of an indicator for the operational state of each wind turbine section 5, and other parameters can be used so long as the parameters are measurable physical quantities indicative of the operational state of each wind turbine section 5.

The anomaly determination unit 7 determines whether an anomaly is present in each wind turbine section 5 on the basis of the operational state of each wind turbine section 5 detected by the detection unit 6. The wind turbine sections 5A and 5B in this embodiment are placed in the environment of relatively similar (approximately the same) wind condition, and thus it is assumed that each of the wind turbine sections 5A and 5B receives approximately the same wind energy and generates electric power in approximately the same operational state during normal operation. That is, in the wind power generator system 1 of multi-rotor type, the installed wind turbine sections 5 are in approximately the same operational state in the case of normal operation. Therefore, anomalous state of each wind turbine section 5 can be detected by acquiring the operational state of each wind turbine section 5 and determining whether the operational state of each wind turbine section 5 is approximately the same. Specifically, the anomaly determination unit 7 calculates an average value and deviations of the value of the predetermined parameter indicating the operational state in the wind turbine sections 5 and determines that the wind turbine section 5 in an operational state in which its deviation is greater than a preset threshold value is anomalous. The anomaly determination will be described in detail later.

The anomaly determination unit 7 includes, for example, a CPU (Central Processing Unit), a memory, such as RAM (Random Access Memory), and a computer-readable recording medium which are not shown. A series of processing for implementing various functions described later, is recorded in the recording medium or the like in a form of a program, and the CPU reads out the program to the RAM or the like to execute processing and computation of information, and thereby to implement the various functions described later.

Fig. 2 is a function block diagram illustrating functions of the anomaly determination unit 7. As illustrated in Fig. 2, the anomaly determination unit 7 includes the first anomaly determination unit 21, an integration unit 22, the second anomaly determination unit 23, and a determination result output unit 24.

The first anomaly determination unit 21 determines whether an anomaly is present in the wind turbine sections 5 on the basis of the instantaneous value of the predetermined parameter indicating the operational state of each wind turbine section 5. Specifically, to the first anomaly determination unit 21, the rotational speed of the rotor of each of the wind turbine sections 5A and 5B detected by the detection unit 6 is input. Thereafter, the average value and deviations of each input rotational speed of the rotor are calculated to determine that the wind turbine section 5 in an operational state in which its deviation is greater than a preset threshold value is anomalous. The threshold value is set within an allowable deviation range (deviation range not observed as an anomaly) when a deviation occurs in the installed wind turbine sections 5. The threshold value is set for each predetermined parameter indicating the operational state. In this embodiment, the number of the installed wind turbine sections 5 is two, and thus, in the aforementioned determination process, specifically, it is determined whether the difference between the rotational speed of the rotor of the wind turbine section 5A and the rotational speed of the rotor of the wind turbine section 5B is great. However, in the case of installing three or more wind turbine sections 5, it is efficient to make a determination based on the average values and deviations of the parameter indicating the operational state. A modification including three or more wind turbine sections 5 will be described later.

The integration unit 22 performs an integrating process on the parameters that indicate physical meanings by being integrated, among the parameters indicating the operational state detected by the detection unit 6. Specifically, to the integration unit 22, the stress of the wind turbine section 5A and the stress of wind turbine section 5B detected by the detection unit 6 are input. The stress is a force (a load) generated in each blade when the external force of the wind acts on the blade included in each wind turbine section 5. The wind irregularly fluctuates, and accordingly, the stress to be generated varies irregularly as well. To quantitatively assess the fatigue on the blade due to the stress, a method such as the rain-flow counting method is typically used to calculate a stress frequency based on a stress amplitude and the number of cycles. That is, in this embodiment, the integration unit 22 calculates the current stress frequency on the basis of a stress frequency calculated in previous control cycles and a stress acquired in the current control cycle.

The second anomaly determination unit 23 determines whether an anomaly is present in the wind turbine sections 5 on the basis of the integrated value of the predetermined parameter indicating the operational state of each wind turbine section 5. Specifically, to the second anomaly determination unit 23, the stress frequency of the wind turbine section 5A and the stress frequency of the wind turbine section 5B integrated by the integration unit 22 are input. Thereafter, as with the first anomaly determination unit 21, the second anomaly determination unit 23 calculates the average value and deviations of each input stress frequency to determine that the wind turbine section 5 in an operational state in which its deviation is greater than a preset threshold value is anomalous. As with the first anomaly determination unit 21, the threshold value in the second anomaly determination unit 23 is also set within an allowable deviation range (deviation range not observed as an anomaly) when the deviation occurs in the installed wind turbine sections 5. In this embodiment, the number of the installed wind turbine sections 5 is two, and thus, in the aforementioned determination process, specifically, it is determined whether the difference between the stress frequency of the wind turbine section 5A and the stress frequency of the wind turbine section 5B is greater than or equal to the predetermined threshold value.

The determination result output unit 24 receives determination results of the first anomaly determination unit 21 and the second anomaly determination unit 23 and outputs whether an anomaly is present in the installed wind turbine sections 5. When an anomaly is determined to be present by at least one of the first anomaly determination unit 21 and the second anomaly determination unit 23, the determination result output unit 24 outputs a signal (including information on the wind turbine section 5 determined to be anomalous) indicating that the anomaly is present. The output anomaly determination result is output to a control device of the wind power generator system 1 and may be displayed on a display or the like, or the anomaly may be notified by a buzzer or the like, or the result may be transmitted to a remote control station or the like via a communication network.

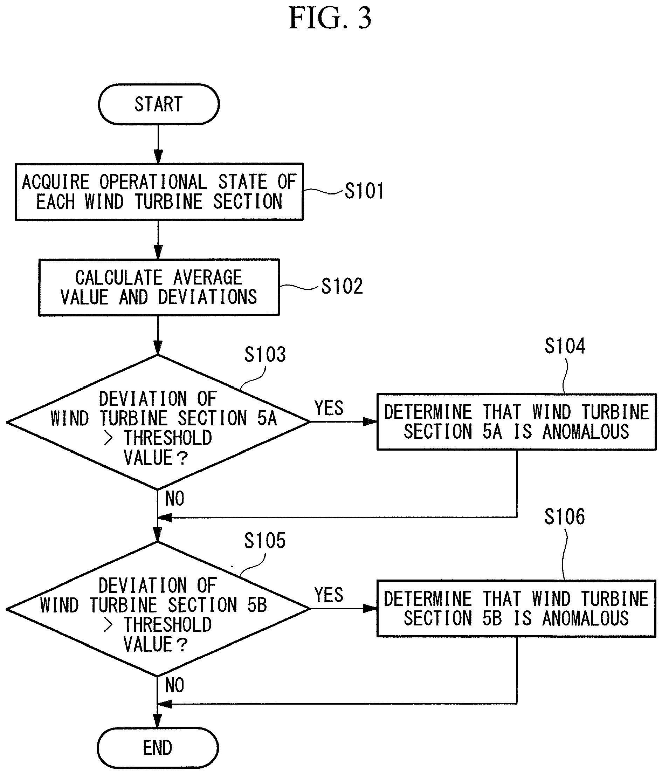

Next, the aforementioned anomaly determination process by the first anomaly determination unit 21 will be described with reference to Fig. 3. The flow shown in Fig. 3 is repeatedly executed in a predetermined control cycle. The anomaly determination process in the second anomaly determination unit 23 is the same as the anomaly determination process by the first anomaly determination unit 21 illustrated in Fig. 3.

First, the detection unit 6 acquires the rotational speed of the rotor (operational state) of each of the wind turbine sections 5A and 5B (S101). Next, an average value of the rotational speed of the rotor in the wind turbine sections 5A and 5B and their respective deviations (a deviation of the rotational speed of the rotor in the wind turbine section 5A and a deviation of the rotational speed of the rotor in the wind turbine section 5B) are calculated (S102).

Then, it is determined whether the deviation of the rotational speed of the rotor in the wind turbine section 5A is greater than or equal to a preset threshold value (S103). Thereafter, when the deviation of the rotational speed of the rotor in the wind turbine section 5A is greater than or equal to the preset threshold value (YES in S103), the operational state of the wind turbine section 5A is determined to be anomalous (S104). Sequentially, the process proceeds to S105.

When the deviation of the rotational speed of the rotor in the wind turbine section 5A is less than the preset threshold value (NO in S103), it is determined whether the deviation of the rotational speed of the rotor in the wind turbine section 5B is greater than or equal to the preset threshold value (S105). Thereafter, when the deviation of the rotational speed of the rotor in the wind turbine section 5B is greater than or equal to the preset threshold value (YES in S105), the operational state of the wind turbine section 5B is determined to be anomalous (S106).

When the deviation of the rotational speed of the rotor in the wind turbine section 5B is less than the preset threshold value (NO in S105), the anomaly determination process ends. When the wind turbine section 5 is not determined to be anomalous, it means that the wind turbine section 5 is determined to be normal.

In this embodiment, the number of the installed wind turbine sections 5 is two, and thus, in the flow shown in Fig. 3, it is determined whether the difference of the rotational speed of the rotor between the wind turbine sections 5A and 5B is significantly great (more specifically, whether the difference is twice the threshold value in the flow of Fig. 3). That is, in the case of two wind turbine sections 5 being installed, the first anomaly determination unit 21 outputs two different results: Both of the wind turbine sections 5A and 5B are anomalous, and both of them are normal. Accordingly, when the first anomaly determination unit 21 determines that both of the wind turbine sections 5A and 5B are anomalous, it may be determined which of the wind turbine sections 5A and 5B is in an anomalous state or may be determined whether both of them are in an anomalous state by referring to past data. Even when a method in which the past data is referred to is used, frequency of referring to the past data is decreased, and therefore processing load can be reduced.

Next, the modification of an anomaly determination system according to this embodiment is described. The number of the installed wind turbine sections 5 is two in the first embodiment described above, whereas the wind power generator system 1 including the anomaly determination system of this modification includes three wind turbine sections 5 (wind turbine section 5A, wind turbine section 5B, and wind turbine section 5C) (not shown).

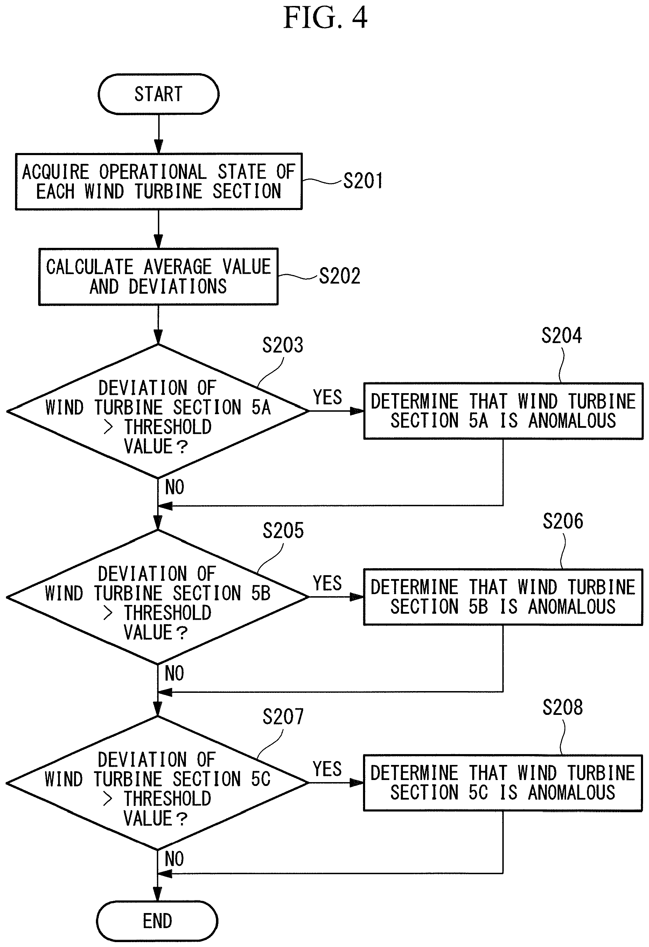

An anomaly determination process by the first anomaly determination unit 21 in this modification will be described with reference to Fig. 4. A flow shown in Fig. 4 is repeatedly executed in a predetermined control cycle. The anomaly determination process in the second anomaly determination unit 23 is also the same as the anomaly determination process by the first anomaly determination unit 21 illustrated in Fig. 4.

First, the detection unit 6 acquires the rotational speed of the rotor in each of the wind turbine sections 5A, 5B, and 5C (S201). Next, an average value of the rotational speed of the rotor in the wind turbine sections 5A, 5B, and 5C and their respective deviations (a deviation of the rotational speed of the rotor in the wind turbine section 5A, a deviation of the rotational speed of the rotor in the wind turbine section 5B, and a deviation of the rotational speed of the rotor in the wind turbine section 5B) are calculated (S202).

Then, it is determined whether the deviation of the rotational speed of the rotor in the wind turbine section 5A is greater than or equal to a preset threshold value (S203). Thereafter, when the deviation of the rotational speed of the rotor in the wind turbine section 5A is greater than or equal to the preset threshold value (YES in S203), the operational state of the wind turbine section 5A is determined to be anomalous (S204). Sequentially, the process proceeds to S205.

When the deviation of the rotational speed of the rotor in the wind turbine section 5A is less than the preset threshold value (NO in S203), it is determined whether the deviation of the rotational speed of the rotor in the wind turbine section 5B is greater than or equal to the preset threshold value (S205). Thereafter, when the deviation of the rotational speed of the rotor in the wind turbine section 5B is greater than or equal to the preset threshold value (YES in S205), the operational state of the wind turbine section 5B is determined to be anomalous (S206). Sequentially, the process proceeds to S207.

When the deviation of the rotational speed of the rotor in the wind turbine section 5B is less than the preset threshold value (NO in S205), it is determined whether the deviation of the rotational speed of the rotor in the wind turbine section 5C is greater than or equal to the preset threshold value (S207). Thereafter, when the deviation of the rotational speed of the rotor in the wind turbine section 5C is greater than or equal to the preset threshold value (YES in S207), the operational state of the wind turbine section 5C is determined to be anomalous (S208).

When the deviation of the rotational speed of the rotor in the wind turbine section 5C is less than the preset threshold value (NO in S207), the anomaly determination process ends. When the wind turbine section 5 is not determined to be anomalous, it means that the wind turbine section 5 is determined to be normal.

Thus, in the case of installing three wind turbine sections 5, it can be determined whether an anomaly is present in each wind turbine section 5. The determination processes described in Figs. 3 and 4 are applicable in cases where more than one wind turbine section 5 is installed.

As has been described, according to the wind power generator system and the method and program for controlling the wind power generator system of this embodiment, each of the wind turbine sections 5 includes the rotor, the blade provided on the rotor, and the electric generator configured to generate electric power by rotational force of the rotor and is supported by the corresponding support member 4 joined to the tower section 3. Accordingly, the wind turbine sections 5 are installed on the tower section 3 via the support members 4. Thus, each wind turbine section 5 is placed in the environment (wind condition) of relatively approximated wind condition and rotates by receiving wind in the same direction to generate electric power. It is assumed that, in the wind turbine sections 5 under approximately equivalent wind condition, their operational states during normal operation substantially coincide with each other. In the present invention, the detection unit 6 detects an operational state of each of the wind turbine sections 5, and it is determined whether an anomaly is present in each wind turbine section 5 on the basis of the detected operational state of each wind turbine section 5. This makes it possible to precisely and quickly determine whether an anomaly is present in the wind turbine sections 5. In a conventional anomaly monitoring method, an actual operational state and a normal model based on accumulated data of the past are compared to each other. However, according to such a configuration described above, such an enormous amount of data and normal models as required for the conventional method is not necessary, and this makes it possible to precisely and quickly determine whether an anomaly is present.

The anomaly determination is based on the instantaneous values and the integrated values, and thus parameters that indicate all types of the operational state can be used. It is consequently possible to precisely and quickly determine whether an anomaly is present.

When the wind turbine sections 5 under approximately the same wind condition are normally operating, it is assumed that the instantaneous value of each of the parameters, i.e., the pressure, temperature, rotational speed of the rotor, rotational speed of the electric generator, and vibration level, and the integrated value of each of the stress and the pitch angle of the blade are substantially equivalent among all the placed wind turbine sections 5. Owing to this, use of the parameter enables more precise determination of whether an anomaly is present.

It is possible to identify the wind turbine section 5 in the operational state that significantly differs from the average value of the predetermined parameter indicating the operational state in the wind turbine sections 5.

That is, in the anomaly determination system of this embodiment is capable of precisely and quickly determining whether an anomaly is present.

For example, although both of the first anomaly determination unit 21 and the second anomaly determination unit 23 are provided in this embodiment, one of them may be omitted.

Although, in this embodiment, the pressure, temperature, rotational speed of the rotor, rotational speed of the electric generator, vibration level, stress, and pitch angle of the blade are described as the parameter indicating the operational state, any other parameters that indicate the operational state can be also used.

### [Second Embodiment]

A second embodiment of a wind power generator system and a method and a program for controlling the wind power generator system of the present invention will be described below, with reference to the drawings. The wind power generator system and the method and the program for controlling the wind power generator system according to this embodiment is described below, focusing mainly on the differences from the first embodiment.

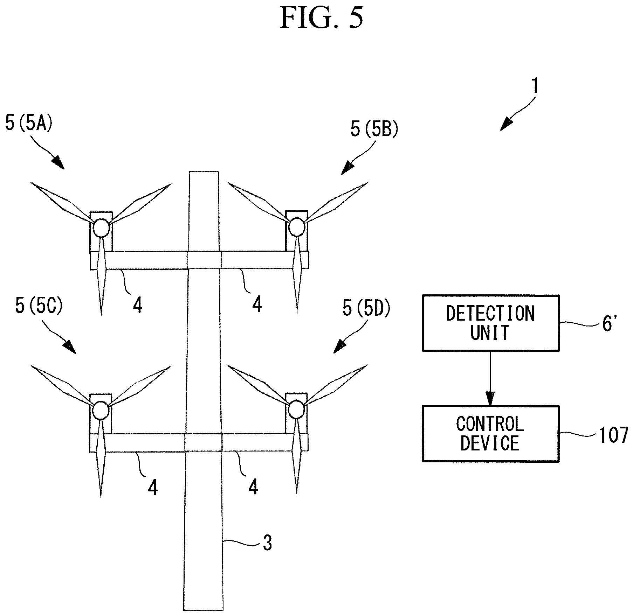

Fig. 5 is a schematic diagram illustrating a wind power generator system 1 including a control system according to the second embodiment of the present invention. As illustrated in Fig. 5, a wind power generator system 1 according to the first embodiment includes, as main components, the tower section 3, the support members 4, the wind turbine sections 5, a detection unit 6', and a control device 107. Although the wind power generator system 1 of this embodiment is described as the wind power generator system 1 of multi-rotor type including four wind turbine sections 5 (5A to 5D), the number of the wind turbine sections 5 is not limited thereto and can be suitably changed. In the following description, the reference numeral of the wind turbine sections 5 will be 5A, 5B, 5C, and 5D when the wind turbine sections 5 are distinguished from each other and will be simply 5 when they are not distinguished from each other.

The detection unit 6' measures the operational state of each of the wind turbine sections 5 as with the detection unit 6. Specifically, the detection unit 6' measures the operational state of each of the wind turbine sections 5A to 5D. The operational state is a measurable physical quantity, such as the pitch angle of the blade, yaw angle of each wind turbine section 5, temperature, stress, rotational speed of the rotor, rotational speed of the electric generator, or vibration level. Although it is preferable to measure more physical quantities, the detection unit 6' only needs to measure the physical quantities measurable when considering difficulty in installation of the detection unit 6' and cost. The physical quantities that are difficult to measure are complemented by a virtual model creation unit 123 described later, to improve accuracy of a virtual model.

The control device 107 determines whether an anomaly is present in the wind turbine sections 5 on the basis of the operational state measured by the detection unit 6', causes the wind turbine section 5 determined to be anomalous to perform an emergency shutdown. Then, the control device 107 creates a virtual model corresponding to the wind power generator system 1 on the basis of the operational state measured by the detection unit 6', and when performing an emergency shutdown, predicts a load to be generated in each component of the wind power generator system 1 using the virtual mode. Thereafter, the control device 107 changes the control parameter of each wind turbine section 5 other than the wind turbine section 5 determined to be anomalous using the virtual model and estimates such a set value of the control parameter that the predicted load becomes minimum. After that, the control device 107 controls each wind turbine section 5 other than the wind turbine section 5 performing an emergency shutdown, on the basis of the estimated set value, before the predicted load is generated in the wind power generator system 1.

The control device 107 includes, for example, a CPU (Central Processing Unit), a memory, such as RAM (Random Access Memory), and a computer-readable recording medium which are not shown. A series of processing for implementing various functions described later, is recorded in the recording medium or the like in a form of a program, and the CPU reads out the program to the RAM or the like to execute processing and computation of information, and thereby to implement the various functions.

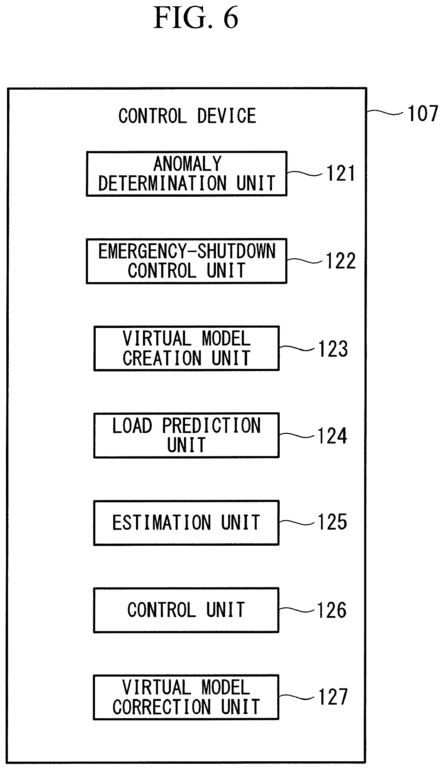

Fig. 6 is a function block diagram illustrating functions of the control device 107. As illustrated in Fig. 6, the control device 107 includes an anomaly determination unit 121, an emergency-shutdown control unit 122, the virtual model creation unit 123, a load prediction unit 124, an estimation unit 125, a control unit 126, and a virtual model correction unit 127.

The anomaly determination unit 121 determines whether an anomaly is present in the wind turbine sections 5 on the basis of the operational state of each wind turbine section 5 detected by the detection unit 6, as with the anomaly determination unit 7 in the first embodiment. The anomaly determination unit 121 may determine whether an anomaly is present in each wind turbine section 5 on the basis of the operational state measured by the detection unit 6'. Specifically, the anomaly determination unit 121 determines whether an anomaly is present in each wind turbine section 5 by comparing the operational state measured by the detection unit 6' to a preset normal range corresponding to the measured operational state. The preset normal range corresponding to the measured operational state is, for example, a normal range of the rotational speed of the rotor, in the case of measuring the rotational speed of the rotor by the detection unit 6' and is a range that can be considered as a normal range of the measured physical quantity. The normal range is preset in accordance with operational data of the past, device specifications, and the like. The anomaly determination method is not limited to the abovementioned method, and various methods are applicable.

The emergency-shutdown control unit 122 causes the wind turbine section 5 determined to be anomalous by the anomaly determination unit 121 to perform an emergency shutdown. Specifically, the emergency-shutdown control unit 122 controls the pitch angle of each blade in the wind turbine section 5 determined to be anomalous, to be an angle at which the blade is not subjected to a force of the wind. The wind turbine section 5 is thereby forced to shut down without causing excessive rotation. The method for causing the wind turbine section 5 to perform an emergency shutdown is not limited to the above method and can be different methods.

The virtual model creation unit 123 creates the virtual model corresponding to the wind power generator system 1, on the basis of the operational state measured by the detection unit 6'. The virtual model is created on an information processing device (a computer) included in the virtual model creation unit 123 and represents the actual wind power generator system 1 in a simulated manner. The virtual model creation unit 123 complements an unmeasurable operational state by acquiring it through simulation using the operational state measured by the detection unit 6', thereby creating the virtual model of the wind power generator system 1. For example, stress near a portion connected to the rotor head in the blade can be relatively easily measured, but stress in a middle portion of the blade is unmeasurable. Thus, the virtual model creation unit 123 estimates the stress in the middle portion of the blade from information about the measurable stress and the like near the portion connected to the rotor head in the blade and thereby forms the virtual model. That is, on the basis of a measured physical quantity in the wind power generator system 1, the virtual model creation unit 123 simulates an unmeasured physical quantity and thereby obtains a highly accurate model of the actually operating wind power generator system 1.

The load prediction unit 124 predicts a load generated in each component of the wind power generator system 1 using the virtual model when the anomaly determination unit 121 determines that the wind turbine section 5 is anomalous, on the basis of information on an emergency shutdown of the wind turbine section 5 determined to be anomalous and information on the current operational state of each wind turbine section 5 other than the wind turbine section 5 determined to be anomalous. The information on the emergency shutdown of the wind turbine section 5 determined to be anomalous includes identification information of the wind turbine section 5 and information relating to an emergency shutdown method (e.g., controlling the pitch angle to shut down the wind turbine section 5). Specifically, the load prediction unit 124 uses the virtual model to simulate how the wind turbine section 5 installed at which position will be caused to perform an emergency shutdown and also to simulate how much load would be generated in which portion of the wind power generator system 1 if each wind turbine section 5 other than the wind turbine section 5 determined to be anomalous maintains the current operational state. As described above, the load can be predicted using the virtual model when an anomaly is determined to be present by the anomaly determination unit 121, and consequently, conditions at which the load is generated can be grasped before the load is actually generated in the wind power generator system 1.

When the load predicted by the load prediction unit 124 is greater than or equal to a preset threshold value, the estimation unit 125 changes the control parameter of each wind turbine sections 5 other than the wind turbine section 5 determined to be anomalous and estimates such a set value of the control parameter that the load predicted by the load prediction unit 124 becomes minimum. Specifically, when such a serious danger that the load predicted by the load prediction unit 124 is greater than or equal to the preset threshold value, the estimation unit 125 estimates how each wind turbine section 5 other than the wind turbine section 5 determined to be anomalous should be controlled to suppress the load. For example, in Fig. 5, if the wind turbine section 5A is determined to be anomalous, the estimation unit 125 simulates how the control parameter (e.g., the pitch angle of the blade) in each of the wind turbine sections 5B to 5D should be set to effectively predict the load to be generated in the wind power generator system 1 due to the emergency shutdown of the wind turbine section 5A.

The threshold value is set to a value obtained by subtracting a predetermined margin from (i.e., a value with a margin for) the allowable maximum load in a specific portion of the wind power generator system 1. In other words, if a load greater than or equal to the threshold value acts on the specific portion, there will be a risk of causing breakage or the like. The threshold value may be individually set for each component of the wind power generator system 1 or may be commonly set.

The control parameter is at least any one of the pitch angle of the blade, yaw angle of the wind turbine section 5, and maximum rotational speed of the electric generator. For example, in the virtual model, the estimation unit 125 changes the pitch angle of each wind turbine section 5 other than the wind turbine section 5 determined to be anomalous in various patterns to simulate the load to be generated in each component of the wind power generator system 1 when the pitch angle is changed and estimates such a pitch angle that the predicted load becomes minimum. The more control parameters are used, more effectively the load is controlled. The above control parameters are merely an example, and any parameter to control the wind power generator system 1 (each wind turbine section 5 etc.) can be used.

The control unit 126 controls each wind turbine section 5 other than the wind turbine section 5 performing an emergency shutdown, on the basis of the set value estimated by the estimation unit 125, before the load predicted by the load prediction unit 124 is generated in the wind power generator system 1. Thus, the control unit 126 is capable of suppressing the load to be generated in the wind power generator system 1 when the wind turbine section 5 determined to be anomalous is actually caused to perform an emergency shutdown, by controlling each wind turbine section 5 other than the wind turbine section 5 performing an emergency shutdown before the load predicted by the load prediction unit 124 is generated.

The virtual model correction unit 127 corrects the virtual model on the basis of the operational state measured by the detection unit 6', when an anomaly of the wind turbine sections 5 is not determined to be present by the anomaly determination unit 121. Specifically, during normal operation (when anomaly of the wind turbine sections 5 is not determined to be present by the anomaly determination unit 121), the virtual model correction unit 127 compares the operational state measured by the detection unit 6' to the operational state in the virtual model corresponding to the measured operational state. Thereafter, the virtual model correction unit 127 corrects the virtual model to match to the operational state measured by the detection unit 6' when there is a difference between them. This makes it possible to approximate the virtual model to the actual wind power generator system 1, thereby improving the accuracy.

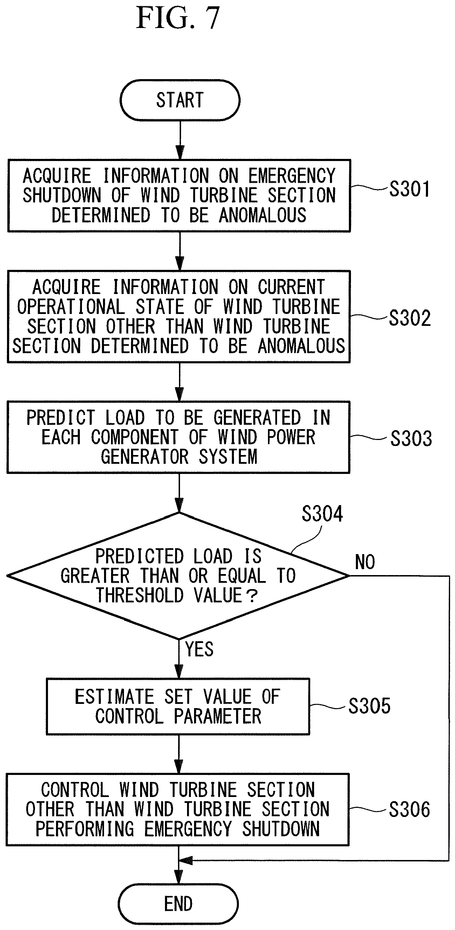

Next, the aforementioned load suppression control by the control device 107 will be described with reference to Fig. 7. The flow shown in Fig. 7 is executed when the anomaly determination unit 121 determines that an anomaly is present. The virtual model created before the anomaly determination unit 121 determines that the anomaly is present is used.

First, information on the emergency shutdown of the wind turbine section 5 determined to be anomalous is acquired (S301). The information on the emergency shutdown of the wind turbine section 5 includes identification information of the wind turbine section 5 and information relating to the emergency shutdown method. Next, information on the current operational state of each wind turbine section 5 other than the wind turbine section 5 determined to be anomalous is acquired (S302). The current operational state of each wind turbine section 5 other than the wind turbine section 5 determined to be anomalous is acquired by being measured by the detection unit 6'.

Then, a load to be generated in each component of the wind power generator system 1 is predicted on the basis of information on an emergency shutdown of the wind turbine section 5 determined to be anomalous and information on the current operational state of each wind turbine section 5 other than the wind turbine section 5 determined to be anomalous (S303). Thereafter, it is determined whether the load to be generated in each component, which is predicted by the load prediction unit 124 is greater than or equal to a preset threshold value (S304).

When it is determined that the load to be generated in each component predicted by the load prediction unit 124 is less than the threshold value (NO in S304), the load is generated due to the emergency shutdown of the wind turbine section 5 determined to be anomalous. However, it is considered that the load is within an allowable range and therefore is low risk, and the process ends.

When it is determined that the load to be generated in each component predicted by the load prediction unit 124 is greater than or equal to the threshold value (YES in S304), a set value of the control parameter for load suppression is estimated (S305). Specifically, in S305, a simulation that changes the control parameter of each wind turbine section 5 other than the wind turbine section 5 determined to be anomalous, in various patterns using the virtual model is performed, and such a set value of the control parameter that the predicted load becomes minimum is estimated.

Sequentially, on the basis of the estimated set value, each wind turbine section 5 other than the wind turbine section 5 performing an emergency shutdown is controlled (S306). In the load suppression control illustrated in Fig. 7, high speed computations are performed at a high-speed mode (about 100 times shorter than the control cycle during normal operation). Owing to this, control in S306 for each wind turbine section 5 other than the wind turbine section 5 performing an emergency shutdown can be performed before the load predicted by the load prediction unit 124 is generated in the wind power generator system 1.

As has been described, according to the wind power generator system and the method and program for controlling the wind power generator system of this embodiment, each of the wind turbine sections 5 includes the rotor, the blade provided on the rotor, and the electric generator configured to generate electric power by rotational force of the rotor and is supported by the corresponding support member 4 joined to the tower section. Accordingly, the wind turbine sections 5 are installed on the tower section 3 via the support members 4. Thus, each wind turbine section 5 is placed in the environment (wind condition) of relatively approximated wind condition and rotates by receiving wind in the same direction to generate electric power. When an anomaly occurs in any of the wind turbine sections 5 and an emergency shutdown is made, a load to be generated in each component due to the emergency shutdown can be predicted using the virtual model of the wind power generator system 1 created based on the actually measured operational state.

When such a serious danger that the load exceeds the preset threshold value is predicted, the control parameter of each wind turbine section 5 other than the wind turbine section 5 determined to be anomalous is changed to perform a simulation, and thereby such a set value of the control parameter that the predicted load becomes minimum is estimated.

Each wind turbine section 5 other than the wind turbine section 5 determined to be anomalous is controlled on the basis of the estimated set value, before the load predicted by the load prediction unit 124 is generated in the wind power generator system 1. This configuration makes it possible to suppress the load to be actually generated in the wind power generator system 1 by controlling the control parameter of each wind turbine section 5 not performing an emergency shutdown before the load generated due to the emergency shutdown is actually generated. Owing to this, influence of the load generated due to the emergency shutdown on the wind power generator system 1 can be effectively suppressed, and consequently, fatigue and failure in each component and the like included in the wind power generator system 1 can be prevented.

The virtual model is corrected on the basis of the measured operational state when such a normal operation that the emergency shutdown is not made is performed, and thus accuracy of the virtual model is improved, and consequently, accuracy of the load prediction and the like are also improved.

The present invention is not limited to only the aforementioned embodiments, and various modifications can be made within the scope of the present invention. The embodiments may be combined with each other.

### [Reference Signs List]

- 1: wind power generator system
- 3: tower section
- 4: support member
- 5(5A-5D): wind turbine section
- 6, 6': detection unit
- 7: anomaly determination unit
- 21: first anomaly determination unit
- 22: integration unit
- 23: second anomaly determination unit
- 24: determination result output unit
- 107: control device
- 121: anomaly determination unit
- 122: emergency-shutdown control unit
- 123: virtual model creation unit
- 124: load prediction unit
- 125: estimation unit
- 126: control unit
- 127: virtual model correction unit

## Claims

1. A wind power generator system (1) comprising:
a tower section (3);
a plurality of wind turbine sections (5), each of which includes a rotor, a blade provided on the rotor, and an electric generator that generates electric power by rotational force of the rotor;
support members (4) joined to the tower section (3) and supporting the respective wind turbine sections (5);
a detection unit (6, 6') configured to detect a value of a predetermined parameter indicating operational state of each of the wind turbine sections (5); and
an anomaly determination unit (7) configured to calculate an average value and deviations of the predetermined parameters and determine whether an anomaly is present in each of the wind turbine sections (5) on the basis of whether the deviation from the average is greater than a preset threshold value.

2. The wind power generator system (1) according to claim 1, wherein the anomaly determination unit (7) determines whether an anomaly is present in the wind turbine sections (5) on the basis of an instantaneous value of a predetermined parameter indicating the operational state of each of the wind turbine sections (5).

3. The wind power generator system (1) according to claim 2, wherein the instantaneous value of the predetermined parameter indicating the operational state may be an instantaneous value of at least any one of pressure, temperature, rotational speed of the rotor, rotational speed of the electric generator, and a vibration level in each of the wind turbine sections (5).

4. The wind power generator system (1) according to claim 1, wherein the anomaly determination unit (7) determines whether an anomaly is present in the wind turbine sections (5) on the basis of an integrated value of the predetermined parameter indicating the operational state in each of the wind turbine sections (5).

5. The wind power generator system (1) according to claim 4, wherein the integrated value of the predetermined parameter indicating the operational state may be an integrated value of at least any one of stress and a pitch angle of the blade in each of the wind turbine sections (5).

6. The wind power generator system (1) according to any one of claims 1 to 5, comprising:
a virtual model creation unit (123) configured to create a virtual model corresponding to the wind power generator system (1) on the basis of the operational state measured by the detection unit (6, 6'); and
a load prediction unit (124) configured, when the anomaly determination unit (121) determines that at least one of the wind turbine sections (5) is anomalous, to predict a load to be generated in each component of the wind power generator system (1) using the virtual model on the basis of information on an emergency shutdown of the wind turbine section (5) determined to be anomalous and information on a current operational state of the wind turbine section (5) other than the wind turbine section (5) determined to be anomalous.

7. The wind power generator system (1) according to claim 6, comprising an estimation unit (125) configured, when the load predicted by the load prediction unit (124) is greater than or equal to a preset threshold value, to change a control parameter of the wind turbine section (5) other than the wind turbine section (5) determined to be anomalous in the virtual model and to estimate such a set value of the control parameter that the load predicted by the load prediction unit (124) becomes minimum.

8. The wind power generator system (1) according to claim 7, comprising a control unit (107) programmed to perform control based on the set value estimated by the estimation unit (125), of the wind turbine section (5) other than the wind turbine section (5) performing an emergency shutdown, before the load predicted by the load prediction unit (124) is generated in the wind power generator system (1).

9. The wind power generator system (1) according to claim 7 or 8, wherein the control parameter is at least any one of a pitch angle of the blade, a yaw angle of the wind turbine section (5), and maximum rotational speed of the electric generator.

10. The wind power generator system (1) according to any one of claims 6 to 9, comprising a virtual model correction unit (127) configured to correct the virtual model on the basis of the operational state measured by the detection unit (6, 6'), when an anomaly of the wind turbine sections (5) is not determined to be present by the anomaly determination unit (121) .

11. A method for controlling a wind power generator system (1) comprising a tower section (3); a plurality of wind turbine sections (5), each of which includes a rotor, a blade provided on the rotor, and an electric generator configured to generate electric power by rotational force of the rotor; and support members (4) joined to the tower section (3) and supporting the respective wind turbine sections (5), the method comprising:
a detection step of detecting a value of a predetermined parameter indicating an operational state of each of the wind turbine sections (5); and
an anomaly determination step of calculating an average value and deviations of the predetermined parameters and determining whether an anomaly is present in each of the wind turbine sections (5) on the basis of whether the deviation from the average is greater than a preset threshold value.

12. A program for controlling a wind power generator system (1) comprising a tower section (3); a plurality of wind turbine sections (5), each of which includes a rotor, a blade provided on the rotor, and an electric generator configured to generate electric power by rotational force of the rotor; and support members (4) joined to the tower section (3) and supporting the respective wind turbine sections (5), the program causing a computer to execute:
a detection process of detecting a value of a predetermined parameter indicating an operational state of each of the wind turbine sections (5); and
an anomaly determination process of calculating an average value and deviations of the predetermined parameters and determining whether an anomaly is present in each of the wind turbine sections (5) on the basis of whether the deviation from the average is greater than a preset threshold value.

## Patentansprüche

1. Ein Windkraftgeneratorsystem (1), aufweisend:
einen Turmabschnitt (3);
eine Vielzahl von Windturbinenabschnitten (5), von denen jeder einen Rotor, ein Blatt, das auf dem Rotor vorgesehen ist, und einen elektrischen Generator umfasst, der durch Rotationskraft des Rotors elektrische Energie erzeugt;
Trageelemente (4), die mit dem Turmabschnitt (3) verbunden sind und die jeweiligen Windturbinenabschnitte (5) tragen;
eine Erfassungseinheit (6, 6'), die konfiguriert ist, um einen Wert eines vorbestimmten Parameters zu erfassen, der einen Betriebszustand jedes der Windturbinenabschnitte (5) anzeigt; und
eine Anomalie-Bestimmungseinheit (7), die konfiguriert ist, um einen Durchschnittswert und Abweichungen der vorbestimmten Parameter zu berechnen und zu bestimmen, ob eine Anomalie in jedem der Windturbinenabschnitte (5) vorliegt, auf der Basis davon, ob die Abweichung von dem Durchschnittswert größer als ein voreingestellter Schwellenwert ist.

2. Das Windkraftgeneratorsystem (1) nach Anspruch 1, wobei die Anomalie-Bestimmungseinheit (7) auf der Basis eines Momentanwerts eines vorbestimmten Parameters, der den Betriebszustand jedes der Windturbinenabschnitte (5) anzeigt, bestimmt, ob eine Anomalie in den Windturbinenabschnitten (5) vorliegt.

3. Das Windkraftgeneratorsystem (1) nach Anspruch 2, wobei der Momentanwert des vorbestimmten Parameters, der den Betriebszustand anzeigt, ein Momentanwert von zumindest einem von einem Druck, einer Temperatur, einer Rotationsgeschwindigkeit des Rotors, einer Rotationsgeschwindigkeit des elektrischen Generators und einem Vibrationspegel in jedem der Windturbinenabschnitte (5) sein kann.

4. Das Windkraftgeneratorsystem (1) nach Anspruch 1, wobei die Anomalie-Bestimmungseinheit (7) auf der Basis eines integrierten Werts des vorbestimmten Parameters, der den Betriebszustand in jedem der Windturbinenabschnitte (5) anzeigt, bestimmt, ob eine Anomalie in den Windturbinenabschnitten (5) vorliegt.

5. Das Windkraftgeneratorsystem (1) nach Anspruch 4, wobei der integrierte Wert des vorbestimmten Parameters, der den Betriebszustand anzeigt, ein integrierter Wert von zumindest einem von einer Spannung und einem Anstellwinkel des Blatts in jedem der Windturbinenabschnitte (5) sein kann.

6. Das Windkraftgeneratorsystem (1) nach einem der Ansprüche 1 bis 5, aufweisend:
eine Einheit (123) zur Erzeugung eines virtuellen Modells, die konfiguriert ist, um auf der Basis des von der Erfassungseinheit (6, 6') gemessenen Betriebszustands ein zu dem Windkraftgeneratorsystem (1) korrespondierendes virtuelles Modell zu erzeugen; und
eine Lastvorhersageeinheit (124), die konfiguriert ist, um, wenn die Anomalie-Bestimmungseinheit (121) bestimmt, dass zumindest einer der Windturbinenabschnitte (5) anomal ist, eine in jeder Komponente des Windkraftgeneratorsystems (1) zu erzeugende Last unter Verwendung des virtuellen Modells auf der Basis von Informationen über eine Notabschaltung des Windturbinenabschnitts (5), der als anomal bestimmt wurde, und von Informationen über einen aktuellen Betriebszustand des Windturbinenabschnitts (5), der von dem als anomal bestimmten Windturbinenabschnitt (5) verschieden ist, vorherzusagen.

7. Das Windkraftgeneratorsystem (1) nach Anspruch 6, mit einer Schätzeinheit (125), die konfiguriert ist, um, wenn die von der Lastvorhersageeinheit (124) vorhergesagte Last größer oder gleich einem voreingestellten Schwellenwert ist, einen Steuerparameter des Windturbinenabschnitts (5), der von dem Windturbinenabschnitt (5) verschieden ist, der in dem virtuellen Modell als anomal bestimmt wurde, zu ändern und einen solchen Einstellwert des Steuerparameters zu schätzen, dass die von der Lastvorhersageeinheit (124) vorhergesagte Last minimal wird.

8. Das Windkraftgeneratorsystem (1) nach Anspruch 7, mit einer Steuereinheit (107), die programmiert ist, um auf der Basis des von der Schätzeinheit (125) geschätzten Einstellwerts eine Steuerung des Windturbinenabschnitts (5) durchzuführen, der von dem Windturbinenabschnitt (5) verschieden ist, der eine Notabschaltung durchführt, bevor die von der Lastvorhersageeinheit (124) vorhergesagte Last in dem Windkraftgeneratorsystem (1) erzeugt wird.

9. Das Windkraftgeneratorsystem (1) nach Anspruch 7 oder 8, wobei der Steuerparameter zumindest einer von einem Anstellwinkel des Blatts, einem Gierwinkel des Windturbinenabschnitts (5) und der maximalen Rotationsgeschwindigkeit des elektrischen Generators ist.

10. Das Windkraftgeneratorsystem (1) nach einem der Ansprüche 6 bis 9, mit einer Einheit (127) zur Korrektur eines virtuellen Modells, die konfiguriert ist, um das virtuelle Modell auf der Basis des von der Erfassungseinheit (6, 6') gemessenen Betriebszustands zu korrigieren, wenn die Anomalie-Bestimmungseinheit (121) nicht bestimmt, dass eine Anomalie der Windturbinenabschnitte (5) vorliegt.

11. Ein Verfahren zum Steuern eines Windkraftgeneratorsystems (1), das einen Turmabschnitt (3); eine Vielzahl von Windturbinenabschnitten (5), von denen jeder einen Rotor, ein auf dem Rotor vorgesehenes Blatt und einen elektrischen Generator umfasst, der konfiguriert ist, um durch Rotationskraft des Rotors elektrische Energie zu erzeugen; und Trageelemente (4) aufweist, die mit dem Turmabschnitt (3) verbunden sind und die jeweiligen Windturbinenabschnitte (5) tragen, wobei das Verfahren aufweist:
einen Erfassungsschritt zum Erfassen eines Werts eines vorbestimmten Parameters, der einen Betriebszustand jedes der Windturbinenabschnitte (5) anzeigt; und
einen Anomalie-Bestimmungsschritt zum Berechnen eines Durchschnittswerts und von Abweichungen der vorbestimmten Parameter und zum Bestimmen, ob eine Anomalie in jedem der Windturbinenabschnitte (5) vorliegt, auf der Basis davon, ob die Abweichung von dem Durchschnittswert größer als ein voreingestellter Schwellenwert ist.

12. Ein Programm zum Steuern eines Windkraftgeneratorsystems (1), das einen Turmabschnitt (3); eine Vielzahl von Windturbinenabschnitten (5), von denen jeder einen Rotor, ein auf dem Rotor vorgesehenes Blatt und einen elektrischen Generator, der konfiguriert ist, um durch Rotationskraft des Rotors elektrische Energie zu erzeugen, umfasst; und Trageelemente (4) aufweist, die mit dem Turmabschnitt (3) verbunden sind und die jeweiligen Windturbinenabschnitte (5) tragen, wobei das Programm einen Computer veranlasst, Folgendes auszuführen:
einen Erfassungsprozess zum Erfassen eines Werts eines vorbestimmten Parameters, der einen Betriebszustand jedes der Windturbinenabschnitte (5) anzeigt; und
einen Anomalie-Bestimmungsprozess zum Berechnen eines Durchschnittswerts und von Abweichungen der vorbestimmten Parameter und zum Bestimmen, ob eine Anomalie in jedem der Windturbinenabschnitte (5) vorliegt, auf der Basis davon, ob die Abweichung von dem Durchschnittswert größer als ein voreingestellter Schwellenwert ist.

## Revendications

1. Système générateur d'énergie éolienne (1) comprenant :
une section de tour (3) ;
une pluralité de sections d'éolienne (5), dont chacune comporte un rotor, une pale prévue sur le rotor, et un générateur électrique qui génère de l'énergie électrique par la force de rotation du rotor ;
des éléments de support (4) joints à la section de tour (3) et supportant les sections d'éolienne (5) respectives ;
une unité de détection (6, 6') configurée pour détecter une valeur d'un paramètre prédéterminé indiquant un état de fonctionnement de chacune des sections d'éolienne (5) ; et
une unité de détermination d'anomalie (7) configurée pour calculer une valeur moyenne et des déviations des paramètres prédéterminés et déterminer si une anomalie est présente dans chacune des sections d'éolienne (5) sur la base de si la déviation de la moyenne est supérieure à une valeur seuil prédéfinie.

2. Système générateur d'énergie éolienne (1) selon la revendication 1, dans lequel l'unité de détermination d'anomalie (7) détermine si une anomalie est présente dans les sections d'éolienne (5) sur la base d'une valeur instantanée d'un paramètre prédéterminé indiquant l'état de fonctionnement de chacune des sections d'éolienne (5).

3. Système générateur d'énergie éolienne (1) selon la revendication 2, dans lequel la valeur instantanée du paramètre prédéterminé indiquant l'état de fonctionnement peut être une valeur instantanée d'au moins l'une quelconque parmi la pression, la température, la vitesse de rotation du rotor, la vitesse de rotation du générateur électrique, et un niveau de vibration dans chacune des sections d'éolienne (5).

4. Système générateur d'énergie éolienne (1) selon la revendication 1, dans lequel l'unité de détermination d'anomalie (7) détermine si une anomalie est présente dans les sections d'éolienne (5) sur la base d'une valeur intégrée du paramètre prédéterminé indiquant l'état de fonctionnement dans chacune des sections d'éolienne (5).

5. Système générateur d'énergie éolienne (1) selon la revendication 4, dans lequel la valeur intégrée du paramètre prédéterminé indiquant l'état de fonctionnement peut être une valeur intégrée d'au moins l'un quelconque parmi la contrainte et un angle de calage de la pale dans chacune des sections d'éolienne (5).

6. Système générateur d'énergie éolienne (1) selon l'une quelconque des revendications 1 à 5, comprenant :
une unité de création de modèle virtuel (123) configurée pour créer un modèle virtuel correspondant au système générateur d'énergie éolienne (1) sur la base de l'état de fonctionnement mesuré par l'unité de détection (6, 6') ; et
une unité de prédiction de charge (124) configurée, lorsque l'unité de détermination d'anomalie (121) détermine qu'au moins une des sections d'éolienne (5) est anormale, pour prédire une charge à générer dans chaque composant du système générateur d'énergie éolienne (1) en utilisant le modèle virtuel sur la base d'informations sur un arrêt d'urgence de la section d'éolienne (5) déterminée comme étant anormale et d'informations sur un état de fonctionnement actuel de la section d'éolienne (5) autre que la section d'éolienne (5) déterminée comme étant anormale.

7. Système générateur d'énergie éolienne (1) selon la revendication 6, comprenant une unité d'estimation (125) configurée, lorsque la charge prédite par l'unité de prédiction de charge (124) est supérieure ou égale à une valeur seuil prédéfinie, pour changer un paramètre de commande de la section d'éolienne (5) autre que la section d'éolienne (5) déterminée comme étant anormale dans le modèle virtuel et pour estimer une valeur définie du paramètre de commande telle que la charge prédite par l'unité de prédiction de charge (124) devienne minimale.

8. Système générateur d'énergie éolienne (1) selon la revendication 7, comprenant une unité de commande (107) programmée pour effectuer une commande basée sur la valeur définie estimée par l'unité d'estimation (125), de la section d'éolienne (5) autre que la section d'éolienne (5) effectuant un arrêt d'urgence, avant que la charge prédite par l'unité de prédiction de charge (124) ne soit générée dans le système générateur d'énergie d'éolienne (1).

9. Système générateur d'énergie éolienne (1) selon la revendication 7 ou 8, dans lequel le paramètre de commande est au moins l'un quelconque parmi un angle de calage de la pale, un angle de lacet de la section d'éolienne (5), et la vitesse de rotation maximale du générateur électrique.

10. Système générateur d'énergie éolienne (1) selon l'une quelconque des revendications 6 à 9, comprenant une unité de correction de modèle virtuel (127) configurée pour corriger le modèle virtuel sur la base de l'état de fonctionnement mesuré par l'unité de détection (6, 6'), lorsqu'une anomalie des sections d'éolienne (5) n'est pas déterminée comme étant présente par l'unité de détermination d'anomalie (121).

11. Procédé pour commander un système générateur d'énergie éolienne (1) comprenant une section de tour (3) ; une pluralité de sections d'éolienne (5), dont chacune comporte un rotor, une pale prévue sur le rotor, et un générateur électrique configuré pour générer de l'énergie électrique par la force de rotation du rotor ; et des éléments de support (4) joints à la section de tour (3) et supportant les sections d'éolienne (5) respectives, le procédé comprenant :
une étape de détection consistant à détecter une valeur d'un paramètre prédéterminé indiquant un état de fonctionnement de chacune des sections d'éolienne (5) ; et
une étape de détermination d'anomalie consistant à calculer une valeur moyenne et des déviations des paramètres prédéterminés et à déterminer si une anomalie est présente dans chacune des sections d'éolienne (5) sur la base de si la déviation de la moyenne est supérieure à une valeur seuil prédéfinie.

12. Programme pour commander un système générateur d'énergie éolienne (1) comprenant une section de tour (3) ; une pluralité de sections d'éolienne (5), dont chacune comporte un rotor, une pale prévue sur le rotor, et un générateur électrique configuré pour générer de l'énergie électrique par la force de rotation du rotor; et des éléments de support (4) joints à la section de tour (3) et supportant les sections d'éolienne (5) respectives, le programme amenant un ordinateur à exécuter :
un processus de détection consistant à détecter une valeur d'un paramètre prédéterminé indiquant un état de fonctionnement de chacune des sections d'éolienne (5) ; et
un processus de détermination d'anomalie consistant à calculer une valeur moyenne et des déviations des paramètres prédéterminés et à déterminer si une anomalie est présente dans chacune des sections d'éolienne (5) sur la base de si la déviation de la moyenne est supérieure à une valeur seuil prédéfinie.
